# EUROPEAN PATENT SPECIFICATION

(11) **EP 1 151 581 B1**
(45) Date of publication and mention of the grant of the patent: **12.03.2008**
(21) Application number: 00908149.8
(22) Date of filing: 21.01.2000
(51) Int. Cl.: H04L 12/28, H04Q 7/38, H04L 29/12

(54) **UTILIZATION OF GRATUITOUS ADDRESS RESOLUTION PROTOCOL FOR MOBILITY SUPPORT**
VERWENDUNG VON FREIEM ADDRESS-RESOLUTION-PROTOKOLL ZUR UNTERSTÜTZUNG VON MOBILITÄT
UTILISATION D'UN PROTOCOLE GRATUIT DE CONVERSION D'ADRESSE POUR SUPPORT MOBILE

(30) Priority: 10.02.1999 US 247515
(43) Date of publication of application: 07.11.2001
(73) Proprietor: TELEFONAKTIEBOLAGET LM ERICSSON (publ), 164 83 Stockholm (SE)
(72) Inventor: JERRESTAM, Dan, S-121 55 Johanneshov (SE); BJÖRUP, Lars, S-117 67 Stockholm (SE); BASILE, Marco, S-173 70 Solna (SE); RINMAN, Martin, S-187 76 Täby (SE)
(74) Representative: HOFFMANN EITLE
(86) International application number: PCT/SE2000/000132
(87) International publication number: WO 2000/048363

(56) References cited:
- EP-A- 0 756 433
- WO-A-92/03006
- US-A- 5 195 127
- US-A- 5 490 139
- US-A- 5 570 366
- US-A- 5 623 532
- US-A- 5 655 219

## Description

### FIELD OF INVENTION

The present invention involves the field of telecommunications. More particularly, the present invention involves the Internet and Internet Protocol (IP) mobility.

### BACKGROUND

The network-layer protocol associated with the Internet is appropriately referred to as the Internet Protocol (IP). IP is used to connect the various networks and subnetworks which make up the Internet by defining, among other things, the rules and procedures which govern the way data, in the form of IP data packets, is routed from a source node to a destination node. To ensure that IP data packets are routed correctly, every node is assigned an IP address, wherein an IP address defines a fixed network location associated with a corresponding node. In general, IP was designed to support the routing of IP data packets between fixed network nodes.

However, with the rapid development of radio-based nodes, a need has arisen to provide IP support for mobile terminals as well as fixed nodes. Where fixed nodes are, in general, immobile, mobile terminals are capable of moving about within an area corresponding to, for example, a subnetwork or local area network (LAN) segment. In doing so, a mobile terminal continuously changes its point-of-attachment to the subnetwork or LAN segment through different network hosts, as one skilled in the art will readily appreciate; wherein each network host serves as a proxy for the mobile terminal.

In order to ensure that data continues to be properly routed to a mobile terminal, despite the fact that the mobile terminal's point-of attachment to the subnetwork or LAN segment and IP address is continuously changing, the mobile terminal registers itself with each network host through which it is attached to the subnetwork or LAN segment. The process of registration generally involves the creation and storage of registration records in the network host through which the mobile terminal is attached. Then, by using the information contained in these registration records, the network host is capable of managing and/or supporting the mobility requirements of the mobile terminal, for example, receiving IP data packets on behalf of the mobile terminal and, thereafter, forwarding the IP data packets to the mobile terminal for processing. However, as the mobile terminal continues to move, and undergoes what is referred to by those skilled in the art as "handover", from one network host to a new network host, the mobile terminal de-registers with the old network host, in addition to registering with the new network host. The de-registration process generally involves the removal of the aforementioned registration records from the old network host. The process of de-registering the mobile terminal is extremely important. For instance, de-registration helps to prevent the unnecessary expenditure of network resources and it helps to prevent security threats. Furthermore, failure to de-register the mobile terminal could result in unacceptable network behavior, such as, more than one host responding as a proxy for the mobile terminal, or improper routing of IP data packets.

Conventionally, there are three general techniques employed for de-registering a mobile terminal (i.e., removing registration records) from a network host. The first of these conventional techniques involves removing the registration records only after a determination has been made that the resources associated with the network host are becoming limited. Generally, this technique employs time stamping and/or a measure of utilization. For example, each time a mobile terminal engages in an activity that requires the assistance of the network host, the network host may record the activity along with a time stamp and/or a measure of utilization (e.g., a number of bytes used). If the network host then determines that it's resources are becoming limited, the network host can analyze the information it has recorded and it can remove registration records based thereon. A simple criteria may, for example, involve identifying the mobile terminal which has not interacted with the network host for the longest period of time. One disadvantage associated with this technique is that the process of monitoring the available resources and analyzing the various records can be quite complex and somewhat resource demanding in its own right.

A second conventional technique involves initializing a timer (e.g., a counter) for each mobile terminal registered with a network host. The timer provides the corresponding mobile terminal with a certain period of time during which the mobile terminal can remain registered with the network host. When the time period expires, the network host de-registers the mobile terminal. The mobile terminal may prevent de-registration by re-initializing the timer before the expiration of the time period. While this is a relatively simple approach, it requires that a timer be assigned to each mobile terminal. Furthermore, when the timer latches, the necessary actions must be undertaken. Accordingly, this technique may also be somewhat resource intensive, particularly when there are numerous mobile terminals. In addition, if the mobile terminal attaches to a new network host, the registration records associated with the mobile terminal in the previous network host may remain there for some time period (e.g., until the time associated with the timer expires). Therefore, the registration records continue to occupy valuable resources even though the mobile terminal no longer requires those resources.

A third conventional technique involves exchanging dedicated de-registration request and reply messages between a new network host to which the mobile terminal is currently attached, and the previous network host. In accordance with this technique, the new network host could instruct the previous network host to remove the registration records associated with the mobile terminal. This technique has one important advantage over the other techniques, and that is, the registration records may be removed from the previous network host as soon as the mobile terminal is attached to the new network host. However, generating a dedicated de-registration request message solely for the purpose of instructing the previous network host to de-register the mobile terminal, and thereafter, generating a dedicated de-registration reply message to acknowledge the de-registration request message involves the additional resources needed to generate these messages and it involves the unnecessary utilization of precious bandwidth.

Accordingly, it would be desirable to provide a technique for removing registration records from a previous network host that is more effective and efficient than the aforementioned conventional techniques described above. It would be particularly desirable to provide a technique that is not resource intensive, a technique that removes the registration records immediately after the mobile terminal associates itself with a new network host, and a technique that does not over utilize available bandwidth.

US-5,195,127 describes a radio telephone system adapted for applications where a small number of radio telephone sets are used to cover a wide communication area with a low communication traffic. The described system comprises base stations and radio telephone sets. The base stations have memories in which they can store an individual ID related to a radio telephone set. In order to register a radio telephone set with a base station, the radio telephone set is mounted on the base station, whereupon the base station determines whether the radio telephone set has the same system ID as stored in the base station and if this is the case, then the individual ID of the radio telephone set is stored in the base station. Furthermore, the individual ID is sent to the other base stations of the system, which in turn compare the received individual ID with individual IDs stored in their own memory. If a stored ID is the same as a received ID, it is erased.

WO 98/39934 describes call redirection methods in a packet based communications network, and the Address Resolution Protocol (ARP) is mentioned in this document.

### SUMMARY OF THE INVENTION

The present invention involves internet protocols, and more specifically, a technique for managing the registration records that are maintained in a network host and utilized by that network host to support the mobility requirements of a mobile terminal. In general, the present invention utilizes information that is already present in gratuitous Address Resolution Protocol (ARP) request messages to assist with the management of mobile terminal registration records.

Accordingly, it is an object of the present invention to provide an effective and efficient technique for managing the attachment and/or detachment of mobile terminals to network hosts in a subnetwork or local area network (LAN) segment.

It is another object of the present invention to provide a technique which exhibits a greater degree of automation for managing the mobile terminal registration records contained in network host.

It is still another object of the present invention to provide a technique which exhibits a greater degree of uniformity for managing the mobile terminal registration records contained in network host.

In accordance with one aspect of the present invention, the above-identified and other objects are achieved by a system and/or a related method for managing a registration record associated with a mobile terminal. The system and/or method involves receiving a gratuitous address resolution protocol (ARP) message at a first network node, where this first network node is associated with a subnetwork or local area network (LAN) segment. Then the system and/or method involves identifying an Internet Protocol (IP) address contained in the gratuitous ARP message, where the IP address being associated with the mobile terminal. A determination is then made as to whether the registration record associated with the mobile terminal is being maintained by the first network node as a function of the identified IP address contained in the gratuitous ARP message. If this is so, then the registration record is removed from amongst any other registration records being maintained by the first network node.

In accordance with another aspect of the present invention, the above-identified and other objects are achieved by a system and/or a related method for establishing a registration record in a first network node for a mobile terminal. The system and/or method involves broadcasting a gratuitous ARP message throughout a subnetwork or LAN segment; the gratuitous ARP message being broadcast by the first network node after the mobile terminal attaches to the subnetwork or LAN segment through the first network node, and receiving the gratuitous ARP message at the first network node through a local loopback interface. Upon receiving the gratuitous ARP message, the mobile terminal registration record is established in the first network node based on information contained in the gratuitous ARP message.

In accordance with yet another aspect of the present invention, the above-identified and other objects are achieved by a system and/or a related method for managing mobile terminal registration records when a mobile terminal changes its point-of-attachment to a subnetwork or LAN segment. The system and/or method involves broadcasting a gratuitous ARP message from a first network host (H_{NEW}) to a number of nodes throughout the subnetwork or LAN segment, where the mobile terminal is currently attached to the subnetwork or LAN segment through H_{NEW}, and where the gratuitous ARP message contains an IP address associated with the mobile terminal. The gratuitous ARP message is then received in each of the number of nodes throughout the subnetwork or LAN segment, and a determination is made as to whether the IP address associated with the mobile terminal, contained in the gratuitous ARP, is further contained in a registration record being maintained by any one of the number of nodes throughout the subnetwork or LAN segment. If the IP address associated with the mobile terminal is contained in a registration record being maintained by one of the number of nodes associated with the subnetwork or LAN segment, then the registration record is removed from amongst any other registration records being maintained by that one node.

### BRIEF DESCRIPTION OF THE DRAWINGS

The objects and advantages of the invention will be understood by reading the following detailed description in conjunction with the drawings in which:
FIG. 1 illustrates an exemplary format of a gratuitous ARP request message;
FIG. 2 illustrates a first exemplary embodiment of the present invention;
FIG. 3 illustrates an exemplary technique for accomplishing the present invention

### DETAILED DESCRIPTION OF THE INVENTION

For a better understanding of the invention, the following detailed description refers to the accompanying drawings, wherein preferred exemplary embodiments of the present invention are illustrated and described. In addition, the reference numbers which identify key elements of the invention in the drawings arc used consistently throughout the description.

As previously stated, the present invention involves a technique for managing (e.g., removing and/or establishing) registration records in a network host, where the registration records are used by the network host to support the mobility requirements of a corresponding mobile terminal connected to a particular subnetwork or local area network (LAN) segment through the network host. In order to overcome the various problems associated with conventional techniques for managing registration records, which include the unnecessary utilization of resources and the unnecessary utilization of bandwidth, the present invention employs the Address Resolution Protocol (ARP) and, more particularly, the information provided in gratuitous ARP messages, as described in greater detail herein below.

In general, when a network node has an Internet Protocol (IP) data packet to send to a second network node, the first network node (i.e., the sending node) must first determine the link-layer address (i.e., the 48 bit hardware address) associated with the second network node (i.e., the receiving node). In an Ethernet environment, the link-layer address would be the address of the Ethernet port to which the receiving node is connected. The process used to make this determination is known in the art as Address Resolution.

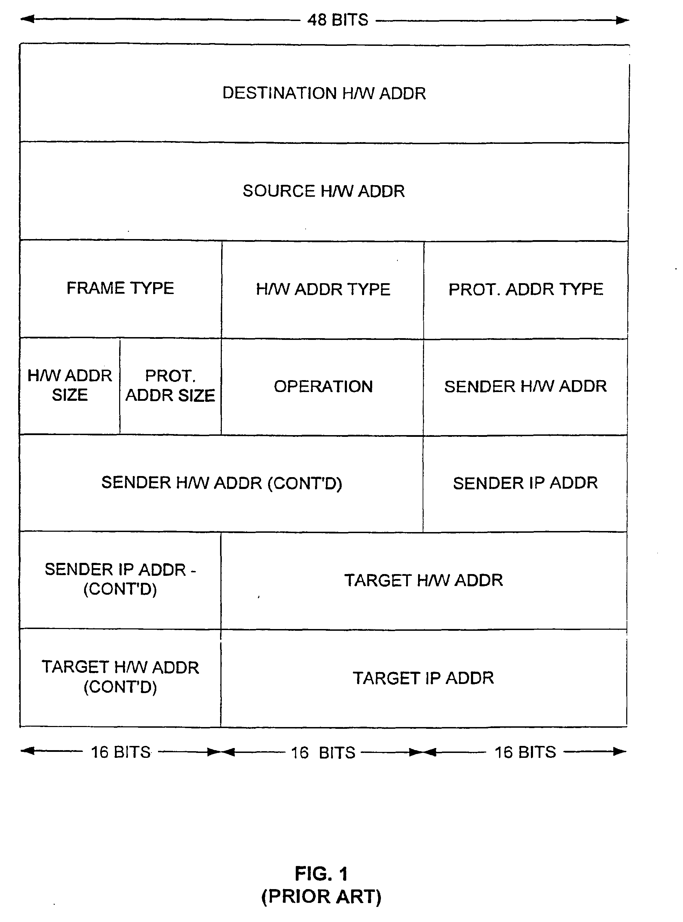

The ARP is a set of rules and procedures for accomplishing Address Resolution. ARP is well known in the art. In general, ARP works as follows. The sending node broadcasts, throughout the subnetwork or LAN segment to which it is attached, an ARP request message. FIG. 1 depicts an exemplary format of an ARP request message. As shown, the ARP request message includes, among other features, a target IP address field (i.e., TARGET IP ADDR). The target IP address field, as the name suggests, contains the IP address associated with the intended receiving node (i.e., the network node whose link-layer address is being sought by the sending node). Because the ARP request message is broadcast throughout the entire subnetwork or LAN segment, numerous network nodes connected to the subnetwork or LAN segment, including the intended receiving node, will actually receive the ARP request message. Upon receiving the ARP request message, each node compares the IP address contained in the target IP address field of the ARP request message with its own one or more IP addresses. If a node determines that the IP address contained in the target IP address field equals (i.e., matches) one of its own IP addresses, the node will generate an ARP reply message. In theory, the IP address contained in the target IP address field of the ARP request message should only match the IP address associated with the intended receiving node. The ARP reply message, of course, contains the hardware address of the intended receiving node. Thus, the sending node now has both the IP address and the hardware address it needs to send the IP data packet to the intended receiving node.

Typically, each network node maintains an ARP cache. An ARP cache, in turn, contains a list of IP addresses, for example, a list of the IP addresses associated with all other nodes in the subnetwork or LAN segment. In addition, the ARP cache contains a mapping between each of the listed IP addresses and a corresponding hardware address. When the sending node (i.e., the network node that broadcast the ARP request message) receives the ARP reply message from the intended receiving node, the sending node creates a new entry or updates an existing entry in it's ARP cache, wherein the new or updated entry provides a mapping between the IP address associated with the intended receiving node and the hardware address associated with the intended receiving node. Generally, each entry in the ARP cache is maintained for a certain period of time, after which, the entry is removed. The purpose of the ARP cache is as follows, a sending node need not broadcast an ARP request message every time it has an IP data packet to send. Instead, the sending node can first consult its ARP cache, and if the cache contains an entry that provides a mapping between the intended receiving node's IP address and hardware address, then the sending node has all of the information it needs to send the IP data packet to the intended receiving node, without having to broadcast an ARP request message.

In accordance with ARP, there are occasions when one network node will generate an ARP reply message on behalf of another network node. An example of such an occasion is where a mobile terminal changes its point-of-attachment to a proxy host in a subnetwork or LAN segment and, as a result, can no longer receive ARP request messages on its own behalf at the IP address associated with its former point-of-attachment. Accordingly, a network node acting on behalf of the mobile terminal may generate the appropriate ARP reply messages for the mobile terminal. ARP reply messages generated by one node on behalf of another, as described above, are referred to as proxy ARP messages.

Also, in accordance with the ARP, a node may issue an unsolicited ARP reply message, that is, an ARP reply message that is not issued in response to an ARP request message. An example of a situation where an unsolicited ARP reply message may be issued is when a node has a new network interface card installed, and wherein the hardware address associated with the new network interface card differs from the hardware address associated with the node's previous network interface card. The primary purpose behind this type of ARP reply message is to inform each of a number of other nodes in the subnetwork or LAN segment that the hardware address associated with the sending node has changed. Each of the receiving nodes can then use the information in the unsolicited ARP reply message to update their ARP cache. ARP reply messages of this type are referred to as gratuitous ARP messages. It should be noted that if a node serves as a proxy host for a mobile terminal, then a gratuitous ARP must be broad casted when the mobile terminal attaches to that proxy host to update any router or other hosts associated with the subnet or LAN segment. Furthermore, permanent ARP records do not expire like those records being maintained in the ARP cache, and gratuitous ARP messages cannot be used to remove them.

As previously stated, the present invention utilizes the ARP, and in particular, gratuitous ARP messages to manage mobile terminal registration records which are stored in and used by a network host, through which a mobile terminal may attach itself to the subnetwork or LAN segment. In general, the present invention accomplishes this by using the information already present in gratuitous ARP messages, which are generated whenever a mobile terminal changes its point-of attachment to the subnetwork or LAN segment from one network host, herein referred to as H_{OLD}, to another network host, herein referred to as H_{NEW}. Since the gratuitous ARP message contains the IP address associated with the mobile terminal, as well as the hardware address (e.g., Ethernet source address) associated with the sending node, which in the present case is H_{NEW}, H_{OLD} is inherently informed that it is no longer required to provide mobility support for the mobile terminal. Thus, H_{OLD} can remove all registration records contained therein associated with the mobile terminal. Consequently, H_{OLD} immediately frees up its often limited resources by removing these registration records, so that the resources are now available to support, for example, the mobility requirements of another mobile terminal.

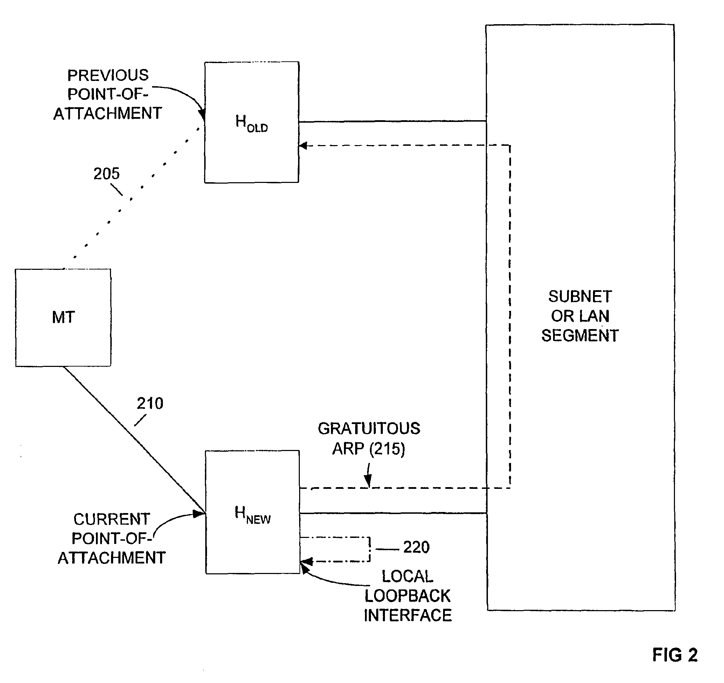

FIG. 2 illustrates, in more detail, a first exemplary embodiment of the present invention. As indicated by line 205 and line 210, a mobile terminal (MT) changes its point-of-attachment to the subnetwork or LAN segment from H_{OLD} to H_{NEW}. Upon establishing a connection with H_{NEW,} as represented by line 210, H_{NEW} broadcasts throughout the subnetwork or LAN segment, a gratuitous ARP message on behalf of the MT. The gratuitous ARP message will, in all likelihood, be received by many, if not all nodes associated with the subnetwork or LAN segment, including H_{OLD}, as indicated by line 215. While the primary purpose for broadcasting the gratuitous ARP message is to inform all of the nodes in the subnetwork or LAN segment that the MT has changed its point-of-attachment, so that the nodes can update their ARP caches as described above, and thus properly route IP data packets to the proxy host for the mobile terminal, H_{OLD} can, in addition, take advantage of the fact that the gratuitous ARP inherently informs H_{OLD} that the MT is now attached to the subnetwork or LAN segment through H_{NEW} and not H_{OLD}. Accordingly, H_{OLD} can delete all of the registration records associated with the MT, which H_{OLD} previously used to support the mobility requirements of the MT when the MT was attached to the subnetwork or LAN segment through H_{OLD}.

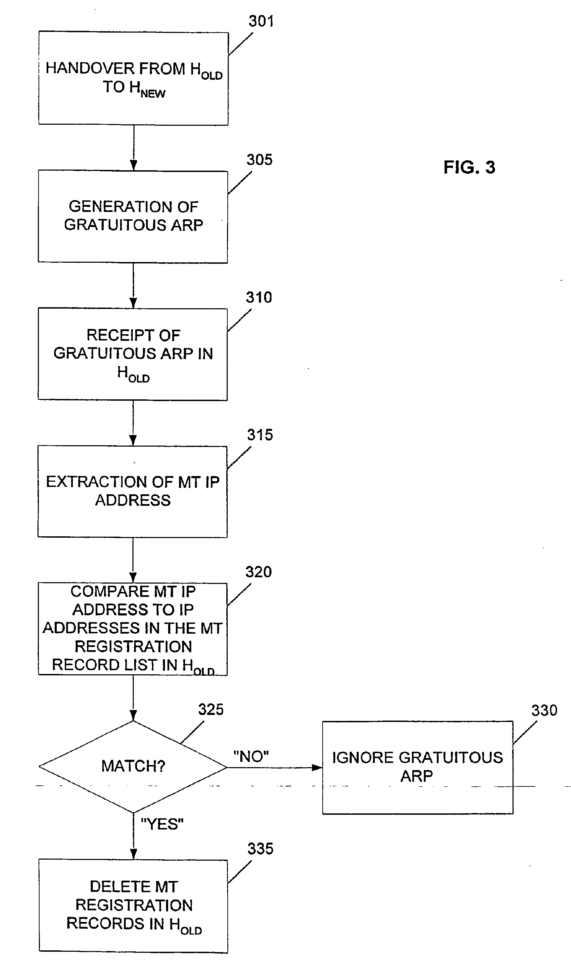

FIG. 3 illustrates, in greater detail, a specific procedure for accomplishing the present invention. As indicated in a first procedural step 301, a mobile terminal changes its point-of-attachment to a subnetwork or LAN segment, for example, as part of a handover procedure, such that it becomes detached from H_{OLD} (i.e., a first host or foreign agent) and reattached to H_{NEW} (i.e., a second network host). Once the mobile terminal does, in fact, attach itself to H_{NEW,} H_{NEW} generates a gratuitous ARP on behalf of (i.e., as a proxy for) the mobile terminal, as illustrated in procedural step 305. As previously stated, the gratuitous ARP is actually broadcast throughout the subnetwork or LAN segment; therefore, the gratuitous ARP may be and, in all likelihood, will be received by numerous other nodes, in addition to H_{OLD}, in accordance with procedural step 310. Each of these numerous nodes, including H_{OLD}, then extract from the TARGET IP ADDR data field in the gratuitous ARP, the mobile terminal's IP address, as indicated by procedural step 315.

In accordance with a preferred embodiment of the present invention, H_{NEW} may employ an IP packet filter to isolate the gratuitous ARP message and to extract the mobile terminal's IP address therefrom. A more detailed description of IP packet filters can be found in S. McCanne and V. Jacobsen, "The BSD Packet Filter," Proceedings of the 1993 Winter USENIX Conference, pp. 259-269, 1993, which is herein incorporated by reference. While using an IP packet filter is believed to be preferred, it will be understood that by setting the hardware interface (e.g., the Ethernet interface) in, what is called the Promiscious Mode, wherein every IP data packet received by a node is independently isolated, the gratuitous ARP message can likewise be isolated and the IP address extracted therefrom.

Once each node, including H_{OLD}, has extracted from the gratuitous ARP the IP address associated with the mobile terminal, each of these nodes compares the extracted IP address to the IP addresses associated with the various registration records they are maintaining, as illustrated by procedural step 320. If a node determines that the extracted IP address does not match any of the registration records which they are maintaining, in accordance with the NO path out of decision step 325, the node simply ignores the gratuitous ARP. That is, the node takes no action on any of the registration records it is maintaining. If, however, a node determines that the extracted IP address does, in fact, match one of the registration records, in accordance with the YES path out of decision step 325, then the node proceeds with deleting all registration records that correspond to that IP address (i.e., the IP address associated with the mobile terminal), as indicated by procedural step 335. While each node in the subnetwork or LAN segment may execute the procedure described above upon receiving the gratuitous ARP message, only H_{OLD} (i.e., the node to which the mobile terminal was previously attached) should contain registration records that correspond to the mobile terminal's IP address.

The registration records contain information used by a host to manage and/or support the mobility requirements of a mobile terminal so that the mobile terminal can continue to communicate in an uninterrupted manner and receive its subscribed services. These records may include one or more entries in an IP data packet routing table; one or more ARP records, which contain the information needed to generate proxy ARP messages on behalf of the mobile terminal; IP data packet filter records, which are used by the packet filter to route or block, as the case may be, certain IP data packets to the mobile terminal; and encryption and authentication records to support, for example, IP_{SEC} protocol tunneling.

FIG. 2 also illustrates another aspect of the present invention. As represented by line 220, the gratuitous ARP message initially generated by H_{NEW} will normally loopback to H_{NEW} through a local loopback interface. It will be understood that the local loopback interface is a function implemented on most network nodes. Furthermore, the local loopback interface permits a client and a server on the same node to communicate with one another. Upon receiving the gratuitous ARP through its local loopback interface, H_{NEW} can establish the registration records necessary to manage and/or support the mobility requirements of the mobile terminal, based on the contents of the gratuitous ARP message. Amongst the registration records that H_{NEW} may create to manage and/or support the mobile terminal are one or more entries in an IP data packet routing table; ARP records; and IP data packet filter records.

The primary advantage of the present invention is that it simplifies the process of managing and/or supporting the mobility requirements of mobile terminals. The present invention simplifies this process by taking advantage of information that already exists in the gratuitous ARP messages generated whenever a mobile terminal changes its point-of-attachment.

The present invention has been described with reference to various exemplary embodiments. However, it will be readily apparent to those skilled in the art that it is possible to embody the invention in specific forms other than those described above. The exemplary embodiments are illustrative and should not be considered restrictive in any way. The scope of the invention is given by the appended claims, rather than the preceding description, and all variations and equivalents thereof which fall within the range of the claims are intended to be embraced therein.

## Claims

1. A method of managing a registration record associated with a mobile terminal (MT), said method comprising the steps of:
receiving (310) a gratuitous address resolution protocol (ARP) message (215) at a network node (H_{OLD}), wherein the network node (H_{OLD}) is associated with a subnetwork or LAN segment;
identifying (315) an Internet Protocol (IP) address contained in the gratuitous ARP message (215), the IP address being associated with the mobile terminal (MT);
determining (320, 325) whether the registration record associated with the mobile terminal (MT) is being maintained by the network node (H_{OLD}) as a function of the identified IP address contained in the gratuitous ARP message (215); and
if it is determined that the registration record associated with the mobile terminal (MT) is being maintained by the network node (H_{OLD}), then removing (335) the registration record from amongst any other registration records being maintained by the network node (H_{OLD}).

2. The method of claim 1, wherein said step of determining whether the registration record associated with the mobile terminal (MT) is being maintained by the network node (H_{OLD}) as a function of the identified IP address contained in the gratuitous ARP message (215) comprises the step of:
comparing (320) the identified IP address contained in the gratuitous ARP message (215) with any IP addresses associated with other registration records being maintained by the network node (H_{OLD}).

3. The method of claim 1, wherein said network node is a first network node (H_{OLD}), and further comprising the step of:
broadcasting (305) the gratuitous ARP message (215), from a second network node (H_{NEW}), throughout the subnetwork or LAN segment.

4. The method of claim 3, wherein the mobile terminal (MT) is currently attached to the subnetwork or LAN segment through the second network node (H_{NEW}).

5. The method of claim 3 further comprising the steps of:
receiving the gratuitous ARP message (215) at the second network node (H_{NEW}) through a local loopback interface (220); and
establishing a new registration record for the mobile terminal (MT) in the second network node (H_{NEW}) based on information contained in the gratuitous ARP message (215).

6. The method of claim 1 further comprising the step of:
broadcasting (305) the gratuitous ARP message (215) from the mobile terminal (MT) throughout the subnetwork or LAN segment.

7. method of claim 3, said method comprising the steps of:
broadcasting (305) said ARP message (215) to a number of nodes throughout the subnetwork or LAN segment,;
receiving the gratuitous ARP message (215) in each of the number of nodes throughout the subnetwork or LAN segment;
determining whether the IP address associated with the mobile terminal (MT) contained in the gratuitous ARP message (215), is further contained in a registration record being maintained by any one of the number of nodes throughout the subnetwork or LAN segment; and
if a determination is made that the IP address associated with the mobile terminal (MT) is contained in a registration record being maintained by one of the number of nodes associated with the subnetwork or LAN segment, then removing that registration record from amongst any other registration records being maintained by the one node.

8. The method of claim 7 further comprising the steps of:
isolating the gratuitous ARP message (215) from any other IP data packets received at each of the nodes throughout the subnetwork or LAN segment; and
extracting (315) the IP address associated with the mobile terminal (MT) from a target IP address field in the gratuitous ARP message (215).

9. The method of claim 7 further comprising the step of:
for each node throughout the subnetwork or LAN segment, ignoring (330) the gratuitous ARP message (215) received if a determination is made that the IP address associated with the mobile terminal (MT) is not contained in any registration record being maintained therein.

10. The method of claim 7, wherein the registration record is an entry in a routing table.

11. The method of claim 7, wherein the registration record is an ARP record.

12. The method of claim 7, wherein the registration record contains IP data packet filter control information.

13. The method of claim 7, wherein the registration record contains IP_{SEC} encryption and authentication information.

14. A method for establishing a registration record in a network node (H_{NEW}) for a mobile terminal (MT) comprising the steps of:
broadcasting (305) a gratuitous address resolution protocol (ARP) message (215) throughout a subnetwork or local area network (LAN) segment, the gratuitous ARP message (215) being broadcast by the network node (H_{NEW}) after the mobile terminal (MT) attaches to the subnetwork or LAN segment through the network node (H_{NEW});
receiving the gratuitous ARP message (215) at the network node (H_{NEW}) through a local loopback interface (220); and
establishing the mobile terminal registration record in the network node (H_{NEW}) based on information contained in the gratuitous ARP message (215).

15. A telecommunications system capable of managing a registration record associated with a mobile terminal (MT), said system comprising:
means for receiving a gratuitous address resolution protocol (ARP) message (215) at a network node (H_{OLD}), wherein the first network node (H_{OLD}) is associated with a subnetwork or LAN segment;
means for identifying an Internet Protocol (IP) address contained in the gratuitous ARP message (215), the IP address being associated with the mobile terminal (MT);
means for determining whether the registration record associated with the mobile terminal (MT) is being maintained by the network node (H_{OLD}) as a function of the identified IP address contained in the gratuitous ARP message (215); and
means for removing the registration record from amongst any other registration records being maintained by the network node (H_{OLD}) if it is determined that the registration record associated with the mobile terminal (MT) is being maintained by the network node (H_{OLD}).

16. The system of claim 15, wherein said means for determining whether the registration record associated with the mobile terminal (MT) is being maintained by the network node (H_{OLD}) as a function of the identified IP address contained in the gratuitous ARP message (215) comprises:
means for comparing the identified IP address contained in the gratuitous ARP message (215) with any IP addresses associated with other registration records being maintained by the network node (H_{OLD}).

17. The system of claim 15, where said network node is a first network node, said system further comprising:
means for broadcasting the gratuitous ARP message (215), from a second network node (H_{NEW}), throughout the subnetwork or LAN segment.

18. The system of claim 17, wherein the mobile terminal (MT) is currently attached to the subnetwork or LAN segment through the second network node (H_{NEW}).

19. The system of claim 17 further comprising:
means for receiving the gratuitous ARP message (215) at the second network node (H_{NEW}) through a local loopback interface (220); and
means for establishing a new registration record for the mobile terminal (MT) in the second network node (H_{NEW}) based on information contained in the gratuitous ARP message (215).

20. The system of claim 15 further comprising:
means for broadcasting the gratuitous ARP message (215) from the mobile terminal (MT) throughout the subnetwork or LAN segment.

21. The system of claim 17, said system comprising:
means for broadcasting said gratuitous ARP message (215) to a number of nodes throughout the subnetwork or LAN segment,
means for receiving the gratuitous ARP message (215) in each of the number of nodes throughout the subnetwork or LAN segment;
means for determining whether the IP address associated with the mobile terminal (MT), contained in the gratuitous ARP message (215), is further contained in a registration record being maintained by any one of the number of nodes throughout the subnetwork of LAN segment; and
means for removing that registration record from amongst any other registration records being maintained by that one node if a determination is made that the IP address associated with the mobile terminal (MT) is contained in a registration record being maintained by one of the number of nodes associated with the subnetwork or LAN segment.

22. The system of claim 21 further comprising:
means for isolating the gratuitous ARP message (215) from any other IP data packets received at each of the nodes throughout the subnetwork or LAN segment; and
means for extracting the IP address associated with the mobile terminal (MT) from a target IP address field in the gratuitous ARP message (215).

23. The system of claim 21 further comprising:
for each node throughout the subnetwork or LAN segment, means for ignoring the gratuitous ARP message (215) received if a determination is made that the IP address associated with the mobile terminal (MT) is not contained in any registration record being maintained therein.

24. The system of claim 21, wherein the registration record is an entry in a routing table.

25. The system of claim 21, wherein the registration record is an ARP record.

26. The system of claim 21, wherein the registration record contains IP data packet filter control information.

27. The system of claim 21, wherein the registration record contains IP_{SEC} encryption and authentication information.

28. A telecommunications system capable of establishing a registration record in a network node (H_{NEW}) for a mobile terminal (MT) comprising:
means for broadcasting a gratuitous address resolution protocol (ARP) message (215) throughout a subnetwork or LAN segment, the gratuitous ARP message (215) being broadcast by the network node (H_{NEW}) after the mobile terminal (MT) attaches to the subnetwork or LAN segment through the network node (H_{NEW});
means for receiving the gratuitous (ARP) message (215) at the network node (H_{NEW}) through a local loopback interface (220); and
means for establishing the mobile terminal registration record in the network node (H_{NEW}) based on information contained in the gratuitous ARP message (215).

## Patentansprüche

1. Ein Verfahren des Handhabens/Verwaltens eines Registrierungs-Datensatzes, assoziiert mit einem Mobil-Endgerät (MT), das Verfahren umfassend diese Schritte:
Empfangen (310) einer kostenlosen Adressen-Auflösungs-Protokoll (ARP) -Mitteilung (215) an einem Netzwerk-Knoten (H_{OLD}), wobei der Netzwerk-Knoten (H_{OLD}) mit einem Sub-Netzwerk oder LAN-Segment assoziiert ist;
Identifizieren (315) einer Internet-Protokoll (IP) -Adresse, enthalten in der kostenlosen ARP-Mitteilung (215), wobei die IP-Adresse assoziiert ist mit dem mobilen Endgerät (MT);
Bestimmen (320, 325), ob der mit dem mobilen Endgerät (MT) assoziierte Registrierungs-Datensatz durch den Netzwerk-Knoten (H_{OLD}) als eine Funktion der in der kostenlosen ARP-Mitteilung (215) enthaltenen identifizierten IP-Adresse gehalten/unterhalten wird; und dann
Entfernen (335) des Registrierungs-Datensatzes aus der Menge irgendwelcher anderer durch den Netzwerk-Knoten (H_{OLD}) gehaltenen/unterhaltenen Registrierungs-Datensätzen, wenn bestimmt wird, dass der mit dem mobilen Endgerät (MT) assoziierte Registrierungs-Datensatz durch den Netzwerk-Knoten (H_{OLD}) gehalten/unterhalten wird.

2. Das Verfahren nach Anspruch 1, wobei der Schritt des Bestimmens, ob der mit dem mobilen Endgerät (MT) assoziierte Registrierungs-Datensatz durch den Netzwerk-Knoten (H_{OLD}) als eine Funktion der in der kostenlosen ARP-Mitteilung (215) enthaltenen identifizierten IP-Adresse gehalten/unterhalten wird, diesen Schritt umfasst:
Vergleichen (320) der in der kostenlosen ARP-Mitteilung (215) enthaltenen identifizierten IP-Adresse mit irgendwelchen IP-Adressen, welche mit anderen in dem Netzwerk-Knoten (H_{OLD}) gehaltenen/unterhaltenen Registrierungs-Datensätzen assoziiert sind.

3. Das Verfahren nach Anspruch 1, wobei der Netzwerk-Knoten ein erster Netzwerk-Knoten (H_{OLD}) ist und außerdem diesen Schritt umfassend:
Aussenden (305) der kostenlosen ARP-Mitteilung (215) aus einem zweiten Netzwerk-Knoten (H_{NEW}) in das gesamte Sub-Netzwerk oder LAN-Segment.

4. Das Verfahren nach Anspruch 3, wobei das mobile Endgerät (MT) gegenwärtig durch den zweiten Netzwerk-Knoten (H_{NEW}) dem Sub-Netzwerk oder LAN-Segment angeschlossen ist.

5. Das Verfahren nach Anspruch 3, außerdem umfassend diese Schritte:
Empfangen der kostenlosen ARP-Mitteilung (215) an dem zweiten Netzwerk-Knoten (H_{NEW}) durch eine lokale Rückschleifen-Schnittstelle (220); und
Erstellen eines neuen Registrierungs-Datensatzes für das mobile Endgerät (MT) in dem zweiten Netzwerk-Knoten (H_{NEW}), basierend auf in der kostenlosen ARP-Mitteilung (215) enthaltener Information.

6. Das Verfahren nach Anspruch 1, außerdem diesen Schritt umfassend:
Aussenden (305) der kostenlosen ARP-Mitteilung (215) aus dem mobilen Endgerät (MT) in das gesamte Sub-Netzwerk oder das LAN-Segment.

7. Das Verfahren nach Anspruch 3, das Verfahren umfassend diese Schritte:
Aussenden (305) der kostenlosen ARP-Mitteilung (215) an eine Anzahl von Knoten in dem gesamten Sub-Netzwerk oder LAN-Segment;
Empfangen der kostenlosen ARP-Mitteilung (215) in jedem aus der Menge(Anzahl) von Knoten in dem gesamten Sub-Netzwerk oder LAN-Segment;
Bestimmen, ob die in der kostenlosen ARP-Mitteilung (215) enthaltene, mit dem mobilen Endgerät (MT) assoziierte, IP-Adresse außerdem in einem Registrierungs-Datensatz durch irgendeinen aus der Menge von Knoten in dem gesamten Sub-Netzwerk oder LAN-Segment gehalten/unterhalten wird; und dann
Entfernen dieses Registrierungs-Datensatzes aus irgendwelchen anderen durch den Knoten gehaltenen/unterhaltenen Registrierungs-Datensätzen, wenn eine Bestimmung gemacht wird, dass die mit dem mobilen Endgerät (MT) assoziierte IP-Adresse in einem Registrierungs-Datensatz enthalten ist, welcher durch einen aus der Menge von mit dem Sub-Netzwerk oder dem LAN-Segment assoziierten Knoten gehalten/unterhalten wird.

8. Das Verfahren nach Anspruch 7, außerdem umfassend diese Schritte:
Isolieren der kostenlosen ARP-Mitteilung (215) aus irgendwelchen anderen IP-Datenpaketen, welche an jedem von den Knoten in dem gesamten Sub-Netzwerk oder LAN-Segment empfangen wurden; und
Extrahieren (315) der mit dem mobilen Endgerät (MT) assoziierten IP-Adresse aus einem Ziel-Adressen-Feld in der kostenlosen ARP-Mitteilung (215).

9. Das Verfahren nach Anspruch 7, außerdem umfassend diesen Schritt:
Ignorieren (330), für jeden Knoten in dem gesamten Subnetzwerk oder LAN-Segment, der empfangenen kostenlosen ARP-Mitteilung (215), wenn eine Bestimmung gemacht wird, dass die mit dem mobilen Endgerät assoziierte IP-Adresse nicht in irgendeinem in dem Knoten gehaltenen/unterhaltenen Registrierungs-Datensatz enthalten ist.

10. Das Verfahren nach Anspruch 7, wobei der Registrierungs-Datensatz ein Eintrag in einer Wegführungs-Tabelle ist.

11. Das Verfahren nach Anspruch 7, wobei der Registrierungs-Datensatz ein ARP-Datensatz ist.

12. Das Verfahren nach Anspruch 7, wobei der Registrierungs-Datensatz Filter-Steuerungs-Information für IP-Datenpakete enthält.

13. Das Verfahren nach Anspruch 7, wobei der Registrierungs-Datensatz IP_{SEC}-Verschlüsselungs- und Authentifizierungs-Information enthält.

14. Ein Verfahren für das Erstellen eines Registrierungs-Datensatzes in einem Netzwerk-Knoten (H_{NEW}) für ein mobiles Endgerät (MT), umfassend diese Schritte:
Aussenden (305) einer kostenlosen Adressen-Auflösungs-Protokoll (ARP) -Mitteilung (215) in das gesamte Sub-Netzwerk oder das lokale Bereichs-Netzwerk (LAN) -Segment, wobei die kostenlose ARP-Mitteilung (215) durch den Netzwerk-Knoten (H_{NEW}) ausgesandt wird, nachdem das mobile Endgerät (MT) sich dem Sub-Netzwerk oder LAN-Segment über den Netzwerk-Knoten (H_{NEW}) anschließt;
Empfangen der kostenlosen ARP-Mitteilung (215) an dem Netzwerk-Knoten (H_{NEW}) über eine lokale Rückschleifen-Schnittstelle (220); und
Erstellen des Mobil-Endgerät-Registrierungs-Datensatzes in dem Netzwerk-Knoten (H_{NEW}), basierend auf in der kostenlosen ARP-Mitteilung (215) enthaltener Information.

15. Ein Telekommunikations-System, in der Lage einen mit einem mobilen Endgerät (MT) verbundenen Registrierungs-Datensatz zu handhaben/verwalten, das System umfassend:
Mittel für das Empfangen einer kostenlosen Adressen-Auflösungs-Protokoll (ARP) -Mitteilung (215) an einem Netzwerk-Knoten (H_{OLD}), wobei der erste Netzwerk-Knoten (H_{OLD}) mit einem Sub-Netzwerk oder LAN-Segment assoziiert ist;
Mittel für das Identifizieren einer in der kostenlosen ARP-Mitteilung (215) enthaltenen Internet-Protokoll (IP) -Adresse, wobei die IP-Adresse mit dem mobilen Endgerät assoziiert ist;
Mittel für das Bestimmen, ob der mit dem mobilen Endgerät assoziierte Registrierungs-Datensatz durch den Netzwerk-Knoten (H_{OLD}) als eine Funktion der in der kostenlosen ARP-Mitteilung (215) enthaltenen identifizierten IP-Adresse gehalten/unterhalten wird; und
Mittel für das Entfernen des Registrierungs-Datensatzes aus irgendwelchen anderen durch den Netzwerk-Knoten (H_{OLD}) gehaltenen/unterhaltenen Registrierungs-Datensätzen, wenn bestimmt wird, dass der mit dem mobilen Endgerät assoziierte Registrierungs-Datensatz durch den Netzwerk-Knoten (H_{OLD}) gehalten/unterhalten wird.

16. Das System nach Anspruch 15, wobei das Mittel für das Bestimmen, ob der mit dem mobilen Endgerät (MT) assoziierte Registrierungs-Datensatz durch den Netzwerk-Knoten (H_{OLD}) als eine Funktion der in der kostenlosen ARP-Mitteilung (215) enthaltenen identifizierten IP-Adresse gehalten/unterhalten wird, umfasst:
Mittel für Vergleichen der in der kostenlosen ARP-Mitteilung (215) enthaltenen identifizierten IP-Adresse mit irgendwelchen mit anderen Registrierungs-Datensätzen assoziierten IP-Adressen, die durch den Netzwerk-Knoten (H_{OLD}) gehalten/unterhalten werden.

17. Das System nach Anspruch 15, wobei der Netzwerk-Knoten ein erster Netzwerk-Knoten ist, das System außerdem umfassend:
Mittel für das Aussenden der kostenlosen ARP-Mitteilung (215) von einem zweiten Netzwerk-Knoten (H_{NEW}) in das gesamte Sub-Netzwerk oder das LAN-Segment.

18. Das System nach Anspruch 17, wobei das mobile Endgerät (MT) gegenwärtig durch den zweiten Netzwerk-Knoten (H_{NEW}) an das Sub-Netzwerk oder das LAN-Segment angeschlossen ist.

19. Das System nach Anspruch 17, außerdem umfassend:
Mittel für das Empfangen der kostenlosen ARP-Mitteilung (215) an einem zweiten Netzwerk-Knoten (H_{NEW}) durch eine lokale Rückschleifen-Schnittstelle (220); und
Mittel für das Erstellen eines neuen Registrierungs-Datensatzes für das mobile Endgerät (MT) in dem zweiten Netzwerk-Knoten (H_{NEW}), basierend auf in der kostenlosen ARP-Mitteilung (215) enthaltener Information.

20. Das System nach Anspruch 15, außerdem umfassend:
Mittel für das Aussenden der kostenlosen ARP-Mitteilung (215) aus dem mobilen Endgerät (MT) in das gesamte Sub-Netzwerk oder das LAN-Segment.

21. Das System nach Anspruch 17, das System umfassend:
Mittel für das Aussenden der kostenlosen ARP-Mitteilung (215) an eine Anzahl von Knoten in dem gesamten Sub-Netzwerk oder LAN-Segment;
Mittel für das Empfangen der kostenlosen ARP-Mitteilung (215) in jedem aus der Menge von Knoten in dem gesamten Sub-Netzwerk oder LAN-Segment;
Mittel für das Bestimmen, ob die mit dem mobilen Endgerät (MT) assoziierte in der kostenlosen ARP-Mitteilung (215) enthaltene IP-Adresse außerdem in einem durch irgendeinen aus der Menge von Knoten in dem gesamten Sub-Netzwerk oder LAN-Segment gehaltenen/unterhaltenen Registrierungs-Datensatz enthalten ist; und
Mittel für das Entfernen dieses Registrierungs-Datensatzes aus irgendwelchen anderen durch diesen Knoten gehaltenen/unterhaltenen Registrierungs-Datensätzen, wenn eine Bestimmung gemacht wird, dass die mit dem mobilen Endgerät (MT) assoziierte IP-Adresse in einem Registrierungs-Datensatz enthalten ist, welcher durch einen aus der Menge von mit dem Sub-Netzwerk oder LAN-Segment assoziierten Knoten gehalten/unterhalten wird.

22. Das System nach Anspruch 21, außerdem umfassend:
Mittel für das Isolieren der kostenlosen ARP-Mitteilung (215) aus irgendwelchen anderen an jedem von den Knoten in dem gesamten Sub-Netzwerk oder LAN-Segment empfangenen IP-Datenpaketen; und
Mittel für das Extrahieren der mit dem mobilen Endgerät (MT) assoziierten IP-Adresse aus einem Ziel-IP-Adressen-Feld in der kostenlosen ARP-Mitteilung (215).

23. Das System nach Anspruch 21, außerdem umfassend:
Mittel für das Ignorieren der empfangenen kostenlosen ARP-Mitteilung (215) für jeden Knoten in dem gesamten Sub-Netzwerk oder LAN-Segment, wenn eine Bestimmung gemacht wird, dass die mit dem mobilen Endgerät (MT) assoziierte IP-Adresse nicht in irgendeinem in dem Knoten gehaltenen/unterhaltenen Registrierungs-Datensatz enthalten ist.

24. Das System nach Anspruch 21, wobei der Registrierungs-Datensatz ein Eintrag in einer Wegführungs-Tabelle ist.

25. Das System nach Anspruch 21, wobei der Registrierungs-Datensatz ein ARP-Datensatz ist.

26. Das System nach Anspruch 21, wobei der Registrierungs-Datensatz Filter-Steuerungs-Information für IP-Datenpakete enthält.

27. Das System nach Anspruch 21, wobei der Registrierungs-Datensatz IP_{SEC}-Verschlüsselungs- und Authentifizierungs-Information enthält.

28. Ein Telekommunikations-System, fähig einen Registrierungs-Datensatz für ein mobiles Endgerät (MT) in einem Netzwerk-Knoten (H_{NEW}) zu erstellen, umfassend:
Mittel für das Aussenden einer kostenlosen Adressen-Auflösungs-Protokoll (ARP) -Mitteilung (215) in das gesamte Sub-Netzwerk oder LAN-Segment, wobei die kostenlose ARP-Mitteilung (215) durch den Netzwerk-Knoten (H_{NEW}) ausgesendet wird nachdem das mobile Endgerät (MT) sich über den Netzwerk-Knoten (H_{NEW}) dem gesamten Sub-Netzwerk oder LAN-Segment angeschlossen hat;
Mittel für das Empfangen der kostenlosen ARP-Mitteilung (215) an dem Netzwerk-Knoten (H_{NEW}) durch eine lokale Rückschleifen-Schnittstelle (220); und
Mittel für das Erstellen des Mobil-Endgerät-Registrierungs-Datensatzes in dem Netzwerk-Knoten (H_{NEW}) basierend auf in der kostenlosen ARP-Mitteilung (215) enthaltenen Information.

## Revendications

1. Procédé de gestion d'un enregistrement d'inscription associé à un terminal mobile (MT), ledit procédé comprenant les étapes consistant à :
recevoir (310) un message (215) de protocole de résolution d'adresse (ARP) gratuit au niveau d'un noeud de réseau (H_{OLD}), dans lequel le noeud de réseau (H_{OLD}) est associé à un réseau secondaire ou segment de LAN ;
identifier (315) une adresse de Protocole Internet (IP) contenue dans le message d'ARP gratuit (215), l'adresse IP étant associée au terminal mobile (MT) ;
déterminer (320, 325) si l'enregistrement d'inscription associé au terminal mobile (MT) est maintenu par le noeud de réseau (H_{OLD}) comme une fonction de l'adresse IP identifiée contenue dans le message d'ARP gratuit (215) ; et
si on détermine que l'enregistrement d'inscription associé au terminal mobile (MT) est maintenu par le noeud de réseau (H_{OLD}), alors enlever (335) l'enregistrement d'inscription de tous les autres enregistrements d'inscription maintenus par le noeud de réseau (H_{OLD}).

2. Procédé selon la revendication 1, dans lequel ladite étape consistant à déterminer si l'enregistrement d'inscription associé au terminal mobile (MT) est maintenu par le noeud de réseau (H_{OLD}) comme une fonction de l'adresse IP identifiée contenue dans le message d'ARP gratuit (215) comprend l'étape consistant à :
comparer (320) l'adresse IP identifiée contenue dans le message d'ARP gratuit (215) à n'importe quelles adresses IP associées à d'autres enregistrements d'inscription maintenus par le noeud de réseau (H_{OLD}).

3. Procédé selon la revendication 1, dans lequel ledit noeud de réseau est un premier noeud de réseau (H_{OLD}), et comprenant en outre l'étape consistant à :
diffuser (305) le message d'ARP gratuit (215), à partir d'un second noeud de réseau (H_{NEW}), tout au long du réseau secondaire ou segment de LAN.

4. Procédé selon la revendication 3, dans lequel le terminal mobile (MT) est couramment attaché au réseau secondaire ou au segment de LAN par le second noeud de réseau (H_{NEW}).

5. Procédé selon la revendication 3, comprenant en outre les étapes consistant à :
recevoir le message d'ARP gratuit (215) au niveau du second noeud de réseau (H_{NEW}) par une interface de boucle locale (220) ; et
établir un nouvel enregistrement d'inscription pour le terminal mobile (MT) dans le second noeud de réseau (H_{NEW}) en se basant sur des informations contenues dans le message d'ARP gratuit (215).

6. Procédé selon la revendication 1, comprenant en outre l'étape consistant à :
diffuser (305) le message d'ARP gratuit (215) à partir du terminal mobile (MT) tout au long du réseau secondaire ou du segment de LAN.

7. Procédé selon la revendication 3, ledit procédé comprenant les étapes consistant à :
diffuser (305) ledit message (215) d'ARP vers un certain nombre de noeuds tout au long du réseau secondaire ou du segment de LAN ;
recevoir le message d'ARP gratuit (215) dans chaque noeud du nombre de noeuds tout au long du réseau secondaire ou du segment de LAN ;
déterminer si l'adresse IP associée au terminal mobile (MT) contenue dans le message d'ARP gratuit (215) est en outre contenue dans un enregistrement d'inscription maintenu par n'importe lequel du nombre de noeuds tout au long du réseau secondaire ou du segment de LAN ; et
si une détermination est faite en ce que l'adresse IP associée au terminal mobile (MT) est contenue dans un enregistrement d'inscription maintenu par un noeud du nombre de noeuds associés au réseau secondaire ou au segment de LAN, alors enlever cet enregistrement d'inscription depuis tous les autres enregistrements d'inscription maintenus par le noeud particulier.

8. Procédé selon la revendication 7, comprenant en outre les étapes consistant à :
isoler le message d'ARP gratuit (215) de tous les autres paquets de données IP reçus au niveau de chacun des noeuds tout au long du réseau secondaire ou du segment de LAN ; et
extraire (315) l'adresse IP associée au terminal mobile (MT) d'un champ d'adresse IP cible dans le message d'ARP gratuit (215).

9. Procédé selon la revendication 7, comprenant en outre l'étape consistant à :
pour chaque noeud tout au long du réseau secondaire ou du segment de LAN, ignorer (330) le message d'ARP gratuit (215) reçu si une détermination est effectuée en ce que l'adresse IP associée au terminal mobile (MT) n'est contenue dans aucun enregistrement d'inscription maintenu en son sein.

10. Procédé selon la revendication 7, dans lequel l'enregistrement d'inscription est une entrée dans une table d'acheminement.

11. Procédé selon la revendication 7, dans lequel l'enregistrement d'inscription est un enregistrement d'ARP.

12. Procédé selon la revendication 7, dans lequel l'enregistrement d'inscription contient des informations de commande de filtre de paquet de données IP.

13. Procédé selon la revendication 7, dans lequel l'enregistrement d'inscription contient des informations de chiffrage et d'authentification IP_{SEC}.

14. Procédé pour établir un enregistrement d'inscription dans un noeud de réseau (H_{NEW}) pour un terminal mobile (MT) comprenant les étapes consistant à :
diffuser (305) un message (215) de protocole de résolution d'adresse gratuit (ARP) tout au long d'un réseau secondaire ou d'un segment de réseau local (LAN), le message d'ARP gratuit (215) étant diffusé par le noeud de réseau (H_{NEW}) après que le terminal mobile (MT) s'attache au réseau secondaire ou au segment de LAN par le noeud de réseau (H_{NEW});
recevoir le message d'ARP gratuit (215) au niveau du noeud de réseau (H_{NEW}) par une interface de boucle locale (220) ; et
établir l'enregistrement d'inscription de terminal mobile dans le noeud de réseau (H_{NEW}) en se basant sur des informations contenues dans le message d'ARP gratuit (215).

15. Système de télécommunications susceptible de gérer un enregistrement d'inscription associé à un terminal mobile (MT), ledit système comprenant :
un moyen pour recevoir un message (215) de protocole de résolution d'adresse gratuit (ARP) au niveau d'un noeud de réseau (H_{OLD}), dans lequel le premier noeud de réseau (H_{OLD}) est associé à un réseau secondaire ou à un segment de LAN ;
un moyen pour identifier une adresse de Protocole Internet (IP) contenue dans le message d'ARP gratuit (215), l'adresse IP étant associée au terminal mobile (MT);
un moyen pour déterminer si l'enregistrement d'inscription associé au terminal mobile (MT) est maintenu par le noeud de réseau (H_{OLD}) comme une fonction de l'adresse IP identifiée contenue dans le message d'ARP gratuit (215) ; et
un moyen pour enlever l'enregistrement d'inscription de tous les autres enregistrements d'inscription maintenus par le noeud de réseau (H_{OLD}) si on détermine que l'enregistrement d'inscription associé au terminal mobile (MT) est maintenu par le noeud de réseau (H_{OLD}).

16. Système selon la revendication 15, dans lequel ledit moyen pour déterminer si l'enregistrement d'inscription associé au terminal mobile (MT) est maintenu par le noeud de réseau (H_{OLD}) comme une fonction de l'adresse IP identifiée contenue dans le message d'ARP gratuit (215) comprend :
un moyen pour comparer l'adresse IP identifiée contenue dans le message d'ARP gratuit (215) à n'importe quelle adresse IP associée à d'autres enregistrements d'inscription maintenus par le noeud de réseau (H_{OLD}).

17. Système selon la revendication 15, dans lequel ledit noeud de réseau est un premier noeud de réseau, ledit système comprenant en outre :
un moyen pour diffuser le message d'ARP gratuit (215), à partir d'un second noeud de réseau (H_{NEW}), tout au long du réseau secondaire ou du segment de LAN.

18. Système selon la revendication 17, dans lequel le terminal mobile (MT) est couramment attaché au réseau secondaire ou au segment de LAN par le second noeud de réseau (H_{NEW}).

19. Système selon la revendication 17, comprenant en outre :
un moyen pour recevoir le message d'ARP gratuit (215) au niveau du second noeud de réseau (H_{NEW}) par une interface de boucle locale (220) ; et
un moyen pour établir un nouvel enregistrement d'inscription pour le terminal mobile (MT) dans le second noeud de réseau (H_{NEW}) en se basant sur des informations contenues dans le message d'ARP gratuit (215).

20. Système selon la revendication 15, comprenant en outre :
un moyen pour diffuser le message d'ARP gratuit (215) à partir du terminal mobile (MT) tout au long du réseau secondaire ou du segment de LAN.

21. Système selon la revendication 17, ledit système comprenant :
un moyen pour diffuser ledit message d'ARP gratuit (215) vers un certain nombre de noeuds tout au long du réseau secondaire ou du segment de LAN,
un moyen pour recevoir le message d'ARP gratuit (215) dans chaque noeud du nombre de noeuds tout au long du réseau secondaire ou du segment de LAN ;
un moyen pour déterminer si l'adresse IP associée au terminal mobile (MT), contenue dans le message d'ARP gratuit (215), est en outre contenue dans un enregistrement d'inscription maintenu par n'importe quel noeud du nombre de noeuds tout au long du réseau secondaire ou du segment de LAN; et
un moyen pour enlever cet enregistrement d'inscription de tous les autres enregistrements d'inscription maintenus par ce noeud si une détermination est effectuée en ce que l'adresse IP associée au terminal mobile (MT) est contenue dans un enregistrement d'inscription maintenu par un noeud du nombre de noeuds associés au réseau secondaire ou au segment de LAN.

22. Système selon la revendication 21, comprenant en outre :
un moyen pour isoler le message d'ARP gratuit (215) de tous les autres paquets de données IP reçus au niveau de chacun des noeuds tout au long du réseau secondaire ou du segment de LAN ; et
un moyen pour extraire l'adresse IP associée au terminal mobile (MT) à partir d'un champ d'adresse IP cible dans le message d'ARP gratuit (215).

23. Système selon la revendication 21, comprenant en outre :
pour chaque noeud tout au long du réseau secondaire ou du segment de LAN, un moyen pour ignorer le message d'ARP gratuit (215) reçu si une détermination est effectuée en ce que l'adresse IP associée au terminal mobile (MT) n'est contenue dans aucun enregistrement d'inscription maintenu en son sein.

24. Système selon la revendication 21, dans lequel l'enregistrement d'inscription est une entrée dans une table d'acheminement.

25. Système selon la revendication 21, dans lequel l'enregistrement d'inscription est un enregistrement d'ARP.

26. Système selon la revendication 21, dans lequel l'enregistrement d'inscription contient des informations de commande de filtre de paquet de données IP.

27. Système selon la revendication 21, dans lequel l'enregistrement d'inscription contient des informations de chiffrage et d'authentification IP_{SEC}.

28. Système de télécommunications susceptible d'établir un enregistrement d'inscription dans un noeud de réseau (H_{NEW}) pour un terminal mobile (MT) comprenant :
un moyen pour diffuser un message (215) de protocole de résolution d'adresse gratuit (ARP) tout au long d'un réseau secondaire ou d'un segment de LAN, le message d'ARP gratuit (215) étant diffusé par le noeud de réseau (H_{NEW}) après que le terminal mobile (MT) s'attache au réseau secondaire ou au segment de LAN par le noeud de réseau (H_{NEW}) ;
un moyen pour recevoir le message (215) (ARP) gratuit au niveau du noeud de réseau (H_{NEW}) par une interface de boucle locale (220) ; et
un moyen pour établir l'enregistrement d'inscription de terminal mobile dans le noeud de réseau (H_{NEW}) en se basant sur des informations contenues dans le message d'ARP gratuit (215).
